# EUROPEAN PATENT APPLICATION

(11) **EP 2 866 479 A1**
(43) Date of publication of application: **29.04.2015**
(21) Application number: 14163863.5
(22) Date of filing: 08.04.2014
(51) Int. Cl.: H04W 4/14

(54) **Method of handling rejections of SMS messages and related communication system**

(30) Priority: 24.10.2013 US 201314061770
(71) Applicant: Acer Incorporated, New Taipei City 221 (TW)
(72) Inventor: Chuang, Chia-Yun, 221 New Taipei City (TW)
(74) Representative: Becker Kurig Straus

(57) **Abstract**

When a receiving entity is unable to receive an incoming SMS message due to full memory, the sender address of the incoming SMS message is fetched from the transport protocol data units received from an SMS center. The receiving entity is then configured to display a notification message which indicates the sender address and the rejection reason of the incoming SMS message. Based on the sender address, the user may then estimate the importance of the incoming SMS message and give a corresponding instruction.

## Description

### Field of the Invention

The present invention is related to a method of handling rejections of SMS messages and related communication system.

### Background of the Invention

The short message service (SMS) is a messaging mechanism that enables short messages of generally no more than 140∼160 characters in length to be transmitted from, and received by, a wireless communications device.

First introduced in the Global System for Mobile Communications (GSM) system, SMS is currently supported by a majority of other digital-based mobile communications systems, such as Universal Mobile Telecommunications System (UMTS) and Long Term Evolution (LTE) system. The message payload commonly contains plain text, but there are provisions for other types of data, such as pictures, graphics, ring tones, etc. Unlike paging, messages are stored in and forwarded to SMS centers in an SMS system. SMS messages travel to wireless communications devices over the wireless communication coverage network control channel, which is separate and apart from the voice channel.

When an SMS center informs a receiving entity of an incoming SMS message from a sending entity, the receiving entity needs to check its memory capacity. If the device memory is low (usually below 10 MB of free space) or the SMS inbox is full, the receiving entity is configured to show a notification message which indicates the reason why the incoming message was rejected and gives instructions for overcoming the SMS rejection, such as "Incoming message rejected due to full memory. Please delete old messages". After the user deletes old SMS messages, the receiving entity may then continue to receive the incoming SMS message. In the prior art method of handling the rejection of SMS messages, after the user spends time clearing memory space, the incoming SMS message may turn out to be unimportant. Therefore, there is a need for efficiently handling SMS rejections due to memory unavailability, particularly prior to clearing memory space.

### Summary of the Invention

The present invention aims at providing a method of handling SMS messages in a communication system which can therefore efficiently handle SMS rejections due to memory unavailability.

This is achieved by a method of handling a rejection of an SMS message according to claim 1 and by a communication system for handling a rejection of an SMS message according to claim 10. The dependent claims pertain to corresponding further developments and improvements.

As will be seen more clearly from the detailed description following below, the claimed method of handling a rejection of an SMS message which is sent to a receiving entity includes the receiving entity determining if a memory capacity is sufficient for receiving an incoming SMS message when receiving TPDUs associated with the incoming SMS message from an SMS center; the receiving entity fetching the sender address of the incoming SMS message from the TPDUs when the memory capacity is insufficient for receiving the incoming SMS message, and the receiving entity displaying a notification message which indicates the sender address and a rejection reason of the incoming SMS message due to insufficient memory capacity.

As will be seen more clearly from the detailed description following below, the claimed communication system for handling a rejection of an SMS message includes a sending entity, an SMS center and a receiving entity. The sending entity includes a processing component configured to generate TPDUs by encoding the SMS message, wherein a sender address is encoded in a TP-OA field of an SMS-DELIVER TPDU which is defined in a 3GPP technical specification TS 23.040; and a network connectivity unit configured to transmit the TPDUs. The SMS center is configured to receive and forward the TPDUs. The receiving entity includes a network connectivity unit configured to receive the TPDUs forwarded by the SMS center; a processing component configured to determine if a memory capacity of the receiving entity is sufficient for receiving the SMS message; and fetch the sender address of the SMS message by decoding the TP-OA field of the received SMS-DELIVER TPDU when the memory capacity is insufficient for receiving the SMS message; and a screen for displaying a notification message which indicates the sender address and a rejection reason of the SMS message due to insufficient memory capacity.

### Brief Description of the Drawings

In the following, the invention is further illustrated by way of example, taking reference to the accompanying drawings.
FIG. 1 is a diagram illustrating a network structure and protocol layers of an SMS system.
FIG. 2 is a flowchart illustrating a method of handling SMS rejection according to an embodiment of the present invention.
FIG. 3 is a functional diagram illustrating a communication system used in a receiving entity for carrying out the present invention.

### Detailed Description

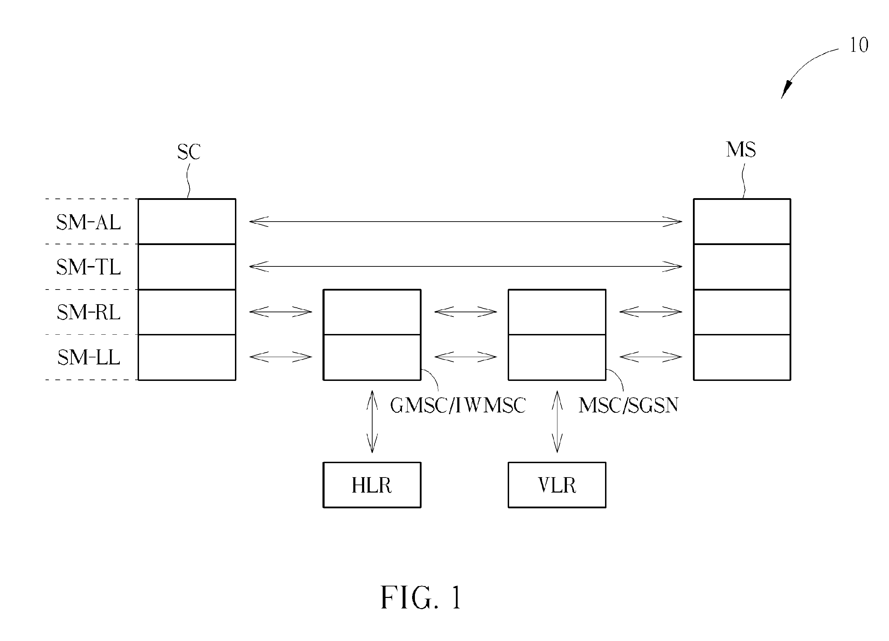

FIG. 1 is a diagram illustrating a network structure and protocol layers of an SMS system 10. The SMS system 10 includes an SMS center SC, a receiving entity MS and a plurality of SMS network entities, such as a mobile switch center MSC, a serving general packet radio service (GPRS) support node SGSN, a gateway mobile switch center GMSC, an interworking mobile switch center IWMSC, a home location register HLR, and a visitor location register VLR.

The transmission of SMS messages is mainly controlled by the SMS center SC, a sending entity (not shown) and the receiving entity MS, while the above-mentioned SMS network entities are responsible for relaying information associated with SMS messages. The home location register HLR and the visitor location register VLR are databases that contain the mobile subscriber information.

In the present invention, the SMS center SC is configured to submit a short message to a receiving entity, retain the responsibility of the message until the report has been received or the validity period expires, receive a report from a public land mobile network (PLMN), receive a short message from a sending entity, and return a report to the PLMN for a previously received short message. The SMS center SC may be implemented on high-speed server platforms in order to provide scalable, reliable and highly available store-and-forward service for SMS messages. The SMS center SC may also support TCP/IP access or data protocols, such as wireless application protocol (WAP). However, the type of the SMS center does not limit the scope of the present invention.

SMS messages sent from a sending entity are known as Mobile Originated (MO), and SMS messages sent to a receiving device are known as Mobile Terminated (MT). The present invention focuses on the MT case. As used herein, the "receiving entity" and the "sending entity" may include transportable electronic devices such as mobile telephones, personal digital assistants, handheld, tablet, nettop, or laptop computers, or other devices with similar telecommunication capabilities. In other cases, the "receiving entity" and the "sending entity" may include non-transportable devices with similar telecommunications capabilities, such as desktop computers, set-top boxes, or network appliances. The "receiving entity" and the "sending entity" may also include any hardware or software component that can terminate a communication session for a user. As well-known to those skilled in the art, the term "entity" may also be referred to "mobile device", "mobile station", "user equipment", "UE", and the like. Also, the type of the receiving entity does not limit the scope of the present invention.

An SMS message is sent over the network as encoded data known as SMS protocol data unit (PDU) between corresponding layers of two SMS network entities. The SMS protocol includes four layer: short message application layer (SM-AL), short message transport layer (SM-TL), short message relay layer (SM-RL), and short message link layer (SM-LL). Detailed operations and structures of the four layers in the SMS protocol are provided in SMS-related 3rd Generation Partnership Project (3GPP) technical specifications, such as TS 23.040. Therefore, only the related information of the SM-TL and the SM-RL are mentioned in the present disclosure.

The SM-TL provides a service to the SM-AL. This service enables the SM-AL to transfer short messages to its peer entity, receive short messages from its peer entity and receive reports about earlier requests for short messages to be transferred. The SM-TL communicates with its peer entity with the following six transport PDUs (TPDUs):
(1) SMS-DELIVER: for conveying a short message from the SC to the MS;
(2) SMS-STATUS-REPORT: for conveying a status report from the SC to the MS;
(3) SMS-DELIVER-REPORT: for conveying a failure cause (if necessary) and information as part of a positive or negative acknowledgement to an SMS-DELIVER or SMS-STATUSREPORT;
(4) SMS-COMMAND: for conveying a command from the MS to the SC;
(5) SMS-SUBMIT: for conveying a short message from the MS to the SC;
(6) SMS-SUBMIT-REPORT: for conveying a failure cause (if necessary) and information as part of a positive or negative acknowledgement to an SMS-SUBMIT or SMS-COMMAND.

The SM-RL provides a service to the SM-TL. This service enables the SM-TL to send TPDUs to its peer entity, receive TPDUs from its peer entity, and receive reports about earlier requests for TPDUs to be transferred. The SM-RL includes the following 6 protocol elements:
(1) RP-MO-DATA: for transferring a TPDU from MS to SC;
(2) RP-MT-DATA: for transferring a TPDU from SC to MS;
(3) RP-SM-MEMORY-AVAILABLE: for notifying the network that the MS has memory available to accept one or more short messages;
(4) RP-ERROR: for informing of an unsuccessful RP-MO-DATA or an RP-MT-DATA transfer attempt;
(5) RP-ACK: for acknowledging an RP-MO-DATA, an RP-MT-DATA or an RP-SM-MEMORY-AVAILABLE
(6) RP-ALERT-SC: for alerting the SC that the MS has recovered operation.

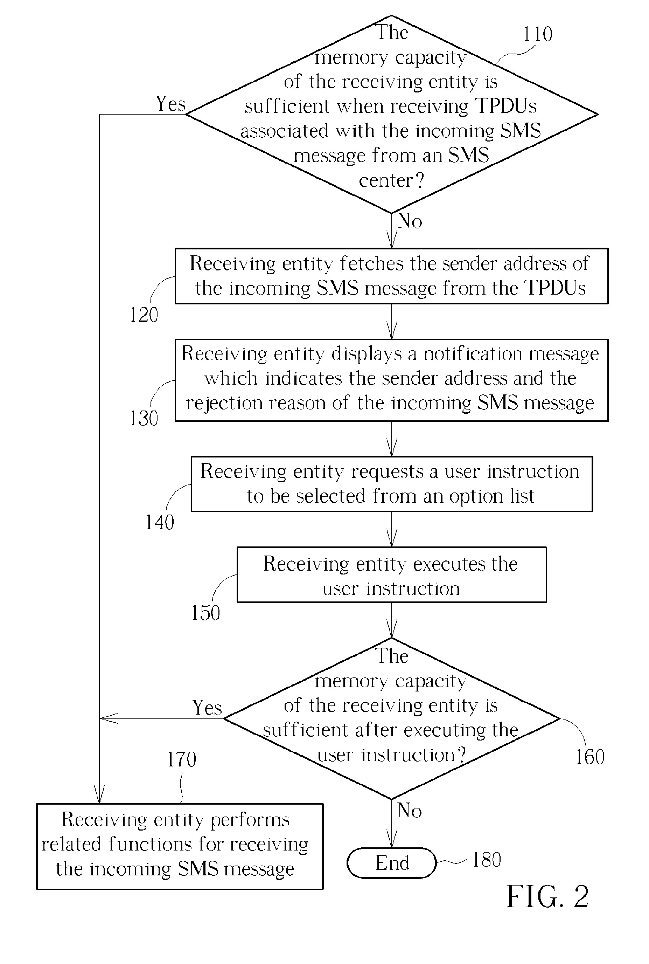

FIG. 2 is a flowchart illustrating a method of handling SMS rejection according to an embodiment of the present invention. The flowchart of FIG. 2 includes the following steps:
- Step 110:: the receiving entity determines if its memory capacity is sufficient for receiving an incoming SMS message when receiving transport protocol data units (TPDUs) associated with the incoming SMS message from an SMS center; if yes, execute step 170; if no, execute step 120.
- Step 120:: the receiving entity fetches the sender address of the incoming SMS message from the TPDUs; execute step 130.
- Step 130:: the receiving entity displays a notification message which indicates the sender address and the rejection reason of the incoming SMS message; execute step 140.
- Step 140:: the receiving entity requests a user instruction to be selected from an option list; execute step 150.
- Step 150:: the receiving entity executes the user instruction; execute step 160.
- Step 160:: the receiving entity determines if its memory capacity is sufficient for receiving the incoming SMS message after executing the user instruction; if yes, execute step 170; if no, execute step 180.
- Step 170:: the receiving entity performs related functions for receiving the incoming SMS message; execute step 180.
- Step 180:: End.

In step 110, the receiving entity MS is informed of the incoming SMS message when receiving corresponding TPDUS from the SMS center SC and the network entities GMSC/IWMSC. In response, the receiving entity MS is then configured to check its memory capacity. If there is no memory available for the incoming SMS message, step 120 is then executed. The lack of memory availability may be due to insufficient memory space or a full SMS inbox.

The following table illustrates basic elements of the SMS-DELIVER TPDU. According to SMS-related 3GPP technical specifications (such as TS 23.040), the source address from which an SMS message originated is encoded in a field known as Transfer-Protocol-Originating-Address (TP-OA) field of the SMS-DELIVER TPDU.

**TABLE**

| Name | Reference | Description |
|---|---|---|
| TP-TI | TP-Message-Type-Indicator | Parameter describing the message type. |
| TP-MMS | TP-More-Message-to-Send | Parameter indicating whether or not there are more messages to send. |
| TP-RP | TP-Reply-Path | Parameter indicating that reply path exists. |
| TP-UDHI | TP-User-Data-Hea der-Indicator | Parameter indicating that the TP-UD field contains a header. |
| TP-SRI | TP-Status-Report-I ndication | Parameter indicating if the SMS has requested a status report. |
| TP-OA | TP-Originating-Add ress | Address of the originating SME |
| TP-PID | TP-Protocol-Indent ifier | Parameter identifying the above layer protocol, if any. |
| TP-DCS | TP-Data-Coding-Scheme | Parameter identifying the coding scheme within the TP-User-Data. |
| TP-SCTS | TP-Service-Centre -Time-Stamp | Parameter identifying time when the SC received the message. |
| TP-UDL | TP-User-Data-Len gth | Parameter indicating the length of the TP-User-Data field to follow. |
| TP-UD | TP-User-Data | |

In step 120, the receiving entity MS may fetch the sender address of the incoming SMS message by decoding the TP-OA field of the SMS-DELIVER PDU.

In step 130, the receiving entity MS may display the notification message which indicates the sender address and the rejection reason of the incoming SMS message. For example, assuming that the sender address fetched in step 120 is a phone number 123456, the notification message may read "Incoming message from 123456 rejected due to full memory". In another embodiment, if the phone number 123456 has been stored in the phonebook of the receiving entity MS under the name ABC, the notification message may read "Incoming message from ABC rejected due to full memory". In other embodiments, the sender address may be displayed in a highlighted form, such as in bold font, in glitter font or in another color. However, the format and appearance of the notification message does not limit the scope of the present invention.

In step 140, the receiving entity MS may display an option list, thereby allowing the user to give further instruction. For example, the receiving entity may display the following options in the option list:
A: Delete old messages;
B: Free memory space;
C: Call 123456/ABC;
D: Ignore the incoming SMS message from 123456/ABC.

If the user selects option A in step 140, the receiving entity MS may enter the SMS inbox in step 150, thereby allowing the user to delete one or more old messages.

If the user selects option B in step 140, the receiving entity MS may enter a user interface for managing its memory usage (such as a file manager) in step 150, thereby allowing the user to delete files or remove applications.

If the user selects option C in step 140, the receiving entity may directly attempt to dial the number of the sending entity without receiving the incoming SMS message in step 150.

If the user selects option D in step 140, the receiving entity may ignore the incoming SMS message in step 150. This may be done by sending an RP-ERROR PDU with a failure cause associated with full memory.

In step 160, the receiving entity MS is configured to re-check its memory capacity after executing the user instruction in step 150. If the user has selected option A or B in step 140 and there may now be memory available for the incoming SMS message after executing step 150, step 170 may then be executed for receiving the incoming SMS message.

In step 170, the receiving entity MS is configured to perform related functions for receiving the incoming SMS message as described in SMS-related 3GPP technical specifications (such as TS 23.040). For example, the receiving entity MS may send an RP-SM-MEMORY-AVAILABLE TPDU to the SMS center SC for notifying the network that the receiving entity MS has memory available to accept one or more short messages. However, how the receiving entity MS receives the incoming SMS message does not limit the scope of the present invention.

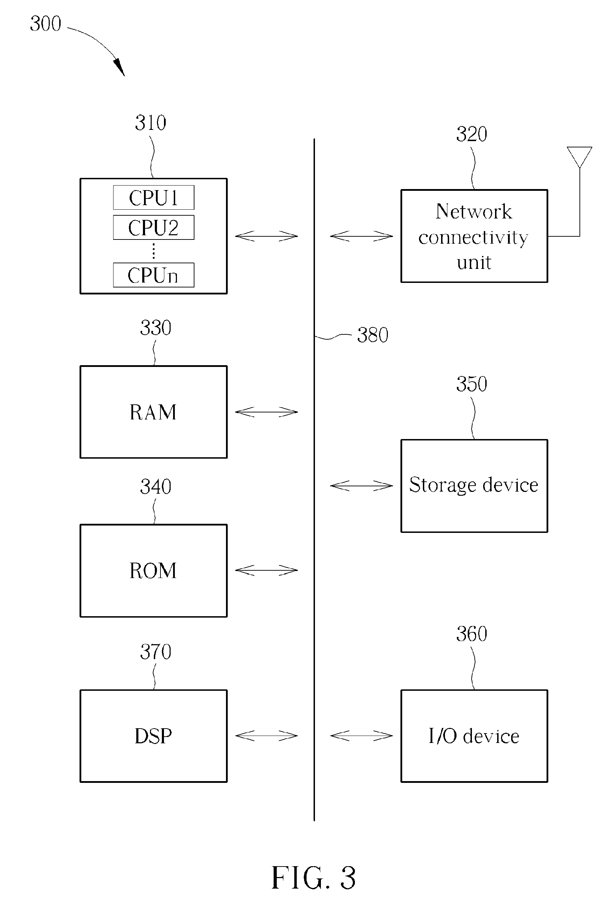

The sending entity and the receiving entity described above may include a processing component capable of executing instructions related to the steps described above. FIG. 3 is a functional diagram illustrating a communication system 300 which may be used in the receiving entity MS for carrying out the present method. The communication system 300 includes a processing component 310, a network connectivity unit 320, random access memory (RAM) 330, read only memory (ROM) 340, a storage device 350, an input/output (I/O) device 360, and a digital signal processor (DSP) 370. These components might communicate with one another via a bus 380. In some cases, some of these components may not be present or may be combined in various combinations with one another or with other components not shown. These components might be located in a single physical entity or in more than one physical entity. Any actions described herein as being taken by the processing component 310 may be taken by the processing component 310 alone or by the processing component 310 in conjunction with one or more components shown or not shown in the drawing, such as with the DSP 370. Although the DSP 370 is shown as a separate component, the DSP 370 might be incorporated into the processing component 310.

The processing component 310 is configured to execute instructions, codes, computer programs, or scripts which may be accessed from the network connectivity units 320, RAM 330, ROM 340, or the storage device 350. The processing component 310 may include one or multiple processors CPU1∼CPUn for executing the present method simultaneously, serially, or otherwise by one processor.

The network connectivity unit 320 may include one or multiple modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, GSM/UMTS/LTE radio transceiver devices, worldwide interoperability for microwave access (WiMAX) devices, and/or other well-known devices for connecting to other network entities. The network connectivity unit 320 allows the processing component 310 to communicate with the Internet or one or more telecommunications networks.

The RAM 330 may be used to store volatile data and instructions that are executed by the processing component 310. The ROM 340 may be used to store instructions and data that are read during execution of the instructions. The storage device 350 may include various disk-based systems such as hard disk, floppy disk, or optical disk and may be used to store programs that are loaded into the RAM 330 when such programs are selected for execution. Access to both the RAM 330 and the ROM 340 is typically faster than access to the storage device 350, but the storage device 350 can provide larger memory capacity. In step 110 of the present invention, the determination of sufficient memory for receiving an incoming SMS message may be based on the available memory space of the RAM 330, ROM 340 and/or the storage device 350.

The I/O devices 360 may include one or more of liquid crystal display (LCD) screens, touch screen displays, keyboards, keypads, switches, dials, mice, track balls, voice recognizers, card readers, paper tape readers, printers, video monitors, or other well-known input/output devices. The I/O devices 360 may be used for displaying the notification message in step 130, displaying the option list in step 140, and receiving the user instruction in step 140.

In the present invention, when a receiving entity is unable to receive an incoming SMS message due to full memory, the sender address of the incoming SMS message is fetched from the TPDUs received from an SMS center. The receiving entity is then configured to display a notification message which indicates the sender address and the rejection reason of the incoming SMS message. Based on the sender address, the user may then estimate the importance of the incoming SMS message and give a corresponding instruction. Therefore, the present invention can provide a method of efficiently handling SMS rejections due to memory unavailability.

## Claims

1. A method of handling a rejection of a short message service (SMS) message which is sent to a receiving entity (MS, 300), the method **characterized by** comprising the steps of:
the receiving entity (MS, 300) determining if a memory capacity is sufficient for receiving an incoming SMS message when receiving transport protocol data units (TPDUs) associated with the incoming SMS message from an SMS center (SC);
the receiving entity (MS, 300) fetching the sender address of the incoming SMS message from the TPDUs when the memory capacity is insufficient for receiving the incoming SMS message; and
the receiving entity (MS, 300) displaying a notification message which indicates the sender address and a rejection reason of the incoming SMS message due to insufficient memory capacity.

2. The method of claim 1 , **characterized in that** the receiving entity (MS, 300) fetching the sender address of the incoming SMS message from the TPDUs is by decoding a Transfer-Protocol-Originating-Address (TP-OA) field of an SMS-DELIVER TPDU which is defined in a 3rd Generation Partnership Project (3GPP) technical specification TS 23.040.

3. The method of claim 1 or 2, further **characterized by**:
the receiving entity (MS, 300) requests a user instruction to be selected from an option list after displaying the notification message, wherein the option list includes options associated with at least two of the following actions:
deleting one or more old SMS messages;
releasing memory space of a device memory of the receiving entity; and
ignoring the incoming SMS message.

4. The method of claim 1 or 2, **characterized in that** the notification message which indicates the sender address includes a number of a sending entity (300) from which the incoming SMS message originated and/or a name associated with the sending entity (300) which is stored in the receiving entity (MS, 300).

5. The method of claim 1, further **characterized by**:
the receiving entity (MS, 300) requests a user instruction to be selected from an option list after displaying the notification message, wherein the option list includes options associated with at least two of the following actions:
deleting one or more old SMS messages;
releasing memory space of a device memory of the receiving entity;
calling a sending entity from which the incoming SMS message originated; and
ignoring the incoming SMS message.

6. The method of claim 3 or 5, further **characterized by**:
the receiving entity (MS, 300) entering an SMS inbox in which the old SMS messages are stored after receiving the user instruction related to deleting one or more old SMS messages.

7. The method of claim 3 or 5, further **characterized by**:
the receiving entity (MS, 300) entering a user interface for managing memory usage of the receiving entity after receiving the user instruction related to releasing the memory space of the device memory.

8. The method of claim 3 or 5, further **characterized by**:
the receiving entity (MS, 300) sending an RP-ERROR PDU with a failure cause associated with insufficient memory capacity to the SMS center after receiving the user instruction related to ignoring the incoming SMS message, wherein the failure cause is defined in a 3GPP technical specification TS 23.040.

9. The method of any of claims 1-8, **characterized in that** the memory capacity is determined to be insufficient for receiving the incoming SMS message when an inbox for storing all received SMS images is full, or when a device memory (330, 340, 350) of the receiving entity (MS, 300) is unable to provide a predetermined amount of free space.

10. A communication system for handling a rejection of an SMS, **characterized by**:
a sending entity (300) including:
a processing component (310) configured to generate TPDUs by encoding the SMS message, wherein a sender address is encoded in a TP-OA field of an SMS-DELIVER TPDU which is defined in a 3GPP technical specification TS 23.040; and
a network connectivity unit (320) configured to transmit the TPDUs;
an SMS center (SC) configured to receive and forward the TPDUs; and
a receiving entity (MS, 300) including:
a network connectivity unit (320) configured to receive the TPDUs forwarded by the SMS center (SC);
a processing component (310) configured to:
determine if a memory capacity of the receiving entity (MS, 300) is sufficient for receiving the SMS message; and
fetch the sender address of the SMS message by decoding the TP-OA field of the received SMS-DELIVER TPDU when the memory capacity is insufficient for receiving the SMS message; and
a screen (360) for displaying a notification message which indicates the sender address and a rejection reason of the SMS message due to insufficient memory capacity.
